# EUROPEAN PATENT APPLICATION

(11) **EP 1 876 677 A2**
(43) Date of publication of application: **09.01.2008**
(21) Application number: 07380061.7
(22) Date of filing: 05.03.2007
(51) Int. Cl.: H01S 3/134, H01S 3/223, B41M 5/26, B23K 26/00

(54) **Laser equipment for marking surfaces**

(30) Priority: 07.03.2006 ES 200600555
(71) Applicant: Macsa ID, S.A., 08240 Manresa (ES)
(72) Inventor: Vogler, Sven, 08240 Manresa (Barcelona) (ES); Boira Plans, Valentí, 08240 Manresa (Barcelona) (ES)
(74) Representative: Durán Moya, Carlos

(57) **Abstract**

The equipment comprises means for capturing the values in real time of the parameters that produce irregularity in marking, means for receiving the values of said parameters and comparing them with the optimum values of the laser tickle pulses according to each specific combination of parameters and means for varying the frequency and duration of the tickle pulse so that it takes the optimum value in real time.

## Description

The present invention relates to a laser equipment for marking the surface of objects that provides substantial novelty and inventive step compared with the current state of the art.

As is already known, laser equipment in different embodiments is widely used to mark objects on their surface, by the application of a bundle of laser beams, which must follow a particular trajectory to reproduce alphanumeric characters or other signs on the surface of the objects to be marked.

When marking with CO2 laser equipment the stability of the laser power is very important. Once the laser starts and is marking at a determined power, manufacturers of laser equipment of low-power CO2, normally between 10W and 100W, although this power may be higher or lower than said limits, guarantee power stability usually at about 5-8%, although these limits may be higher or lower. However, this stability is not very effective in the specific behaviour of laser marking applications since the laser does not normally switch on and operate constantly at a fixed power, but rather it is necessary to start and stop the laser continually to carry out marking of characters, bar codes or two-dimensional codes, for example. Constantly starting and stopping the laser usually impairs stability since the laser is never in power/temperature equilibrium.

In some cases a so-called "tickle pulse" is applied to the laser when it is not marking, in other words, when it is not generating enough power to mark the object.

The tickle pulse preionises the laser gas internally and thus leaves the laser in a "half" state of activation, so that when marking needs to begin and the laser to be activated at 100% of its nominal power, the laser responds more rapidly and most importantly shows much greater stability than when the tickle pulse is not used.

Typically, the tickle pulse has a frequency of 5 to 20 kHz and a pulse time of between 0.5 and 5 microseconds.

Despite the introduction of tickle pulse systems having improved marking by CO2 laser equipment there are still problems to be solved given the irregularity of marking due to the variation of some of the parameters that influence it.

In order to solve the problems indicated and obtain more regular and better quality marking, the inventors have carried out tests and experiments leading to the present invention.

The invention is based on determining the factors that influence the stability of the laser and determining the optimum tickle pulse for any deactivation moment in real time, producing a laser according to the present invention in which much greater stability is achieved compared with the simple, constant application of a tickle pulse.

In order to implement the present invention it is started from a study of the optimum tickle pulse for the different parameters and its tabulation to establish a table of predefined values so that the central processing unit can calculate the optimum tickle pulse for any moment, in real time. Accordingly, the present invention begins by establishing a correlation between the parameters that influence marking regularity, such as:
- ambient temperature
- marking time
- laser lifetime
- material marked.

Once the optimum tickle pulse has been established for each set of specific working circumstances and these data have been incorporated in the central processing unit, this unit will be able, using the values determined for the control parameters, to determine the optimum tickle pulse for each circumstance.

Laser marking equipment will therefore be obtained with the ability to vary the tickle pulse automatically in real time to achieve optimum values for the tickle pulse.

The invention will be better understood with the help of the accompanying drawings explaining the present invention, given as a non-limiting example.

Fig. 1 shows a diagrammatic illustration of the tickle pulse compared with the frequency of the activated laser.

Fig. 2 shows diagrammatically the effect of irregular marking without a tickle pulse.

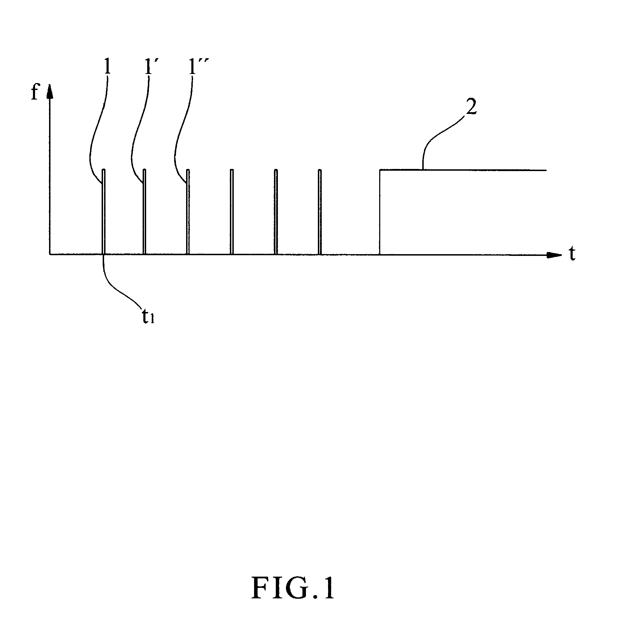

Fig. 1 illustrates the signal level in ordinates and the time in abscissae, a first tickle pulse sector having been illustrated in which multiple pulses such as -1-, -1'-, -1"-, etc. are characterised by a determined signal level, shown in ordinates and for a determined period of time, indicated by t₁. During the period during which the tickle pulse is available there are multiple continual impulses until the laser in continuously switched on. This is illustrated by the abscissa -2-, corresponding ideally to a constant signal level.

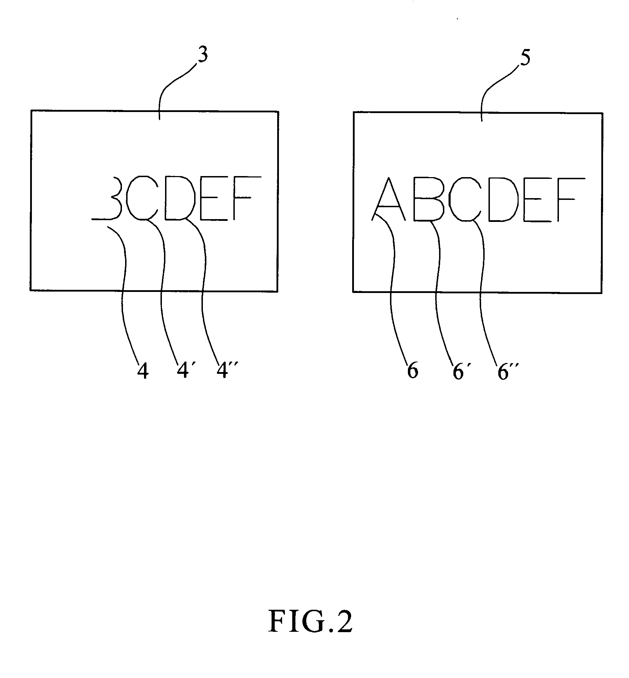

Fig. 2 shows multiple alphanumeric characters, for example -4-, -4'-, -4"-, etc. in the first frame -3- corresponding to marking with no tickle pulse. In this case, when it begins, given the insufficient power of the laser, faulty marking occurs, as can be seen in the drawing, so that some of the characters appear incomplete. Compared with frame -3-, frame -5- illustrates the same alphanumeric marking with the tickle pulse applied, in which the alphanumeric characters -6-, -6'-, -6"-, etc. appear complete and uniform marking is formed.

Clearly, the object of the present invention lies in ensuring that marking is always regular regardless of variation in the parameters that influence it, the tickle pulse being varied according to the variation in the parameters by identifying the values thereof and using calculation algorithms or tables of values depending on said parameters. The equipment that is the object of the present invention will therefore be able to correct the tickle pulse automatically in real time.

The present invention has been described with reference to diagrammatic drawings for better understanding thereof, referring to parameters that influence marking regularity, but this should not be regarded as limiting the present invention, which will be limited only by the scope of the accompanying claims.

## Claims

1. Laser equipment for marking surfaces, of the type that has a tickle pulse generating device to regularise marking in the immediate initial portion when switch-on begins, **characterised in that** it has means for capturing the values in real time of the parameters that produce irregular marking, means for receiving the values of said parameters and comparing them with the optimum values of the laser tickle pulses according to each specific combination of parameters and means for varying the frequency and duration of the tickle pulse so that it assumes the optimum value in real time.

2. Laser equipment for marking surfaces, according to claim 1, **characterised in that** ambient temperature, marking time, laser lifetime and the material marked are taken as measurement parameters.

3. Laser apparatus for marking surfaces, according to claim 1, **characterised in that** it has tickle pulse adjustment interfaces for the manual adjustment thereof.

4. Laser equipment for marking surfaces, according to claim 1, **characterised in that** it comprises means in the central processing unit of the equipment for varying the optimum tickle pulse automatically and in real time.

5. Laser equipment for marking surfaces, according to claim 4, **characterised in that** determination of the optimum tickle pulse is carried out using algorithms previously incorporated in the central processing unit.

6. Laser equipment for marking surfaces, according to claim 1, **characterised in that** determination of the optimum tickle pulse is carried out by entering the values of the parameters measured in real time in tables contained in the central processing unit of the equipment.
